# EUROPEAN PATENT APPLICATION

(11) **EP 2 479 464 A1**
(43) Date of publication of application: **25.07.2012**
(21) Application number: 12151762.7
(22) Date of filing: 19.01.2012
(51) Int. Cl.: F16K 17/30

(54) **SAFETY VALVE FOR CONDUIT - AND HOSE BREAKAGES**

(30) Priority: 20.01.2011 DE 202011002240 U
(71) Applicant: BT Products AB, 595 81 Mjölby (SE)
(72) Inventor: Nissen, Nis-Georg, 24357 Güby (DE); Bärnström, Joakim, 590 72 Ljungsbro (SE); Söderlund, Martin, 582 46 Linköping (SE)
(74) Representative: Norberg, Charlotte

(57) **Abstract**

The invention pertains to a safety valve for pipe or hose breakages, for example in the form of an insertion cartridge, for use in hydraulic load-lifting apparatuses such as forklifts, hoists or charging cranes for closing off load-carrying conduits in case of damages, wherein a sealing seat (2) comprises an associated closure element (3), for example in the form of a valve disc (3), for blocking pressure medium supplied via flow passages (6,7) against a restoring force of a spring (4). The movable closure element (3) is attached to a cylindrical piston (8), which plunges into a corresponding bore (9) to form a displacement chamber (10) which is connected to the cylinder space (16) via a gap (11) of the piston (8) and/or of the bore (9).

## Description

The invention pertains to a safety valve for pipe or hose breakages, for example in the form of an insertion cartridge, for use in hydraulic load-lifting apparatuses such as forklifts, hoists or charging cranes for closing off load-carrying conduits in case of damages, wherein a sealing seat comprises an associated closure element, for example in the form of a valve disc, for blocking pressure medium supplied via flow passages against a restoring force of a spring.

Safety valves of this kind are known in a great variety of forms, whereby in case of a breakage of a load-carrying conduit, a blocking is to be performed by the safety valve in order to prevent an uncontrolled fall of a load.

A safety valves of this kind is known from DE 25 00 552 C2. In order to ensure a proper operation under normal conditions, an operational volume flow is always to be dimensioned to be substantially lower than an activation flow of the safety valve. In this connection it is to be considered that oscillating loads or expanding fluid volumes caused by pressure-relief generate transient volume peaks, which significantly exceed corresponding nominal volume flows. Such influences may however not lead to activation of the safety valve. Due to this circumstance of the known devises, the shortcoming remains that the safety valves must be adjusted in accordance with their activation flow and therefore the arrangements are operated well below prescribed allowed speeds, which results in performance restrictions.

Further, from DE 20 2009 008 659 U an embodiment of a safety valve for dampened closing movement is known, which ensures an optimal operational volume flow and with no activation at transient volume flow changes and occurring pressure peaks with a change of a throttle cross-section. In this connection, the closure element is on the downstream side connected to a movably arranged cylindrical piston, which plunges into a closed bore as displacement chamber and via a piston gap is connected to the flow passage space. Thereby, a time-delayed activation of the closure element upon a transiently changing operational volume flow is ensured with no change in throttle cross-section.

As regards the known devices, the shortcoming remains that by systems that may oscillate, such as lifting masts of industrial lift trucks, a renewed opening after activation of the safety device cannot be excluded.

In case of activation of the pipe breakage safety device, the volume flow of the falling load is abruptly discontinued through the pipe breakage safety device and the load is stopped. By means of the energy storage of the resilient systems, for example chains, cylinders, oleic acid and hoses, the stop may be followed by an unloading of the pipe breakage safety device on the cylinder side. Since the closed pipe breakage safety device is held closed against the spring that acts in the opening direction only by means of the static load pressure, a dynamic short fall of a critical load pressure may consequently result in a renewed opening of the pipe breakage safety device. This effect may, depending on the load, after a renewed closing occur again, so that a load in the extreme case is not finally brought to a standstill but oscillatory lowered to the floor or is indeed, with decaying dynamic, brought to a standstill. Thereby, the high stresses on load and machine upon stopping of an operating load arise repeatedly and a load may possibly not be finally stopped.

The object of the invention is to provide a safety valve of the above described kind, which after the first activation and closing of the valve prevents a renewed opening, and in a simple manner precludes an oscillatory lowering of a load.

In accordance with the present invention, this object is solved by the fact that the movable closure element is attached to a cylindrical piston, which plunges into a corresponding bore to form a displacement chamber which is connected to the cylinder space via a gap of the piston and/or of the bore.

This embodiment brings the advantage that a time-delayed activation of the closure element upon short fall of a static opening pressure is realized and it remains closed sufficiently long for the load pressure to rise again in the closed condition. In this way the safety valve remain closed even though the opening pressure is temporary deceeded.

In accordance with an advantageous arrangement, the piston comprises a supply for supplying the pressure medium to the displacement chamber, which supply is controlled by a check valve.

It is further suggested that an opening speed and thus a switch-over time of the valve is determinable by means of the gap dimension of the gap to the displacement chamber.

An advantageous embodiment is achieved by the bearing pressure medium affecting the closure element via bores in an end element of the housing and enclosing the displacement chamber for the piston.

It is further suggested that the closure element and the piston form an integral unit.

Also, an inversion of the elements is envisioned, whereby the closure element comprises a cylindrical bore, which upon opening slides over a corresponding piston of the housing.

An exemplary embodiment of the invention is schematically disclosed in the drawing, where:

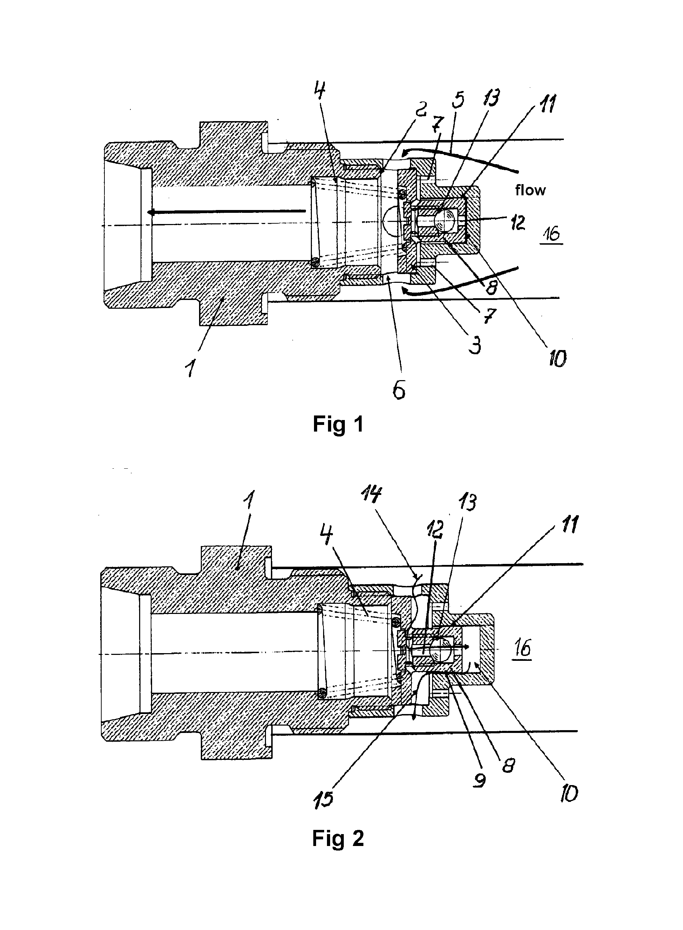

Fig. 1 shows a section of a safety valve in the open position, and

Fig. 2 is a view in accordance with Fig. 1 with the safety valve in the closed position.

The illustrated safety valve is in the form of an insertion cartridge and essentially consists of a housing 1 with a sealing seat 2, which is associated with a valve disc 3 as closure element. The valve disc 3 is held against a spring 4 by a bearing fluid as pressure medium, whereby the pressure medium is supplied in accordance with the flow arrows 5 via radial flow openings 6, whose cross-sections are controllable by the movable valve disc 3. The pressure medium is thereby, in the open position, led to the area of the valve disc 3 via supplies 7 in the end area of the housing 1.

A not shown alternative embodiment corresponds to an inversion of the elements, in that the movable valve disc 3 comprises a bore and the end piece of the housing comprises a cylindrical piston.

The valve disc 3 center is attached to a cylindrical piston 8, which is guided in a corresponding bore 9 of the housing 1 end area, thereby forming a displacement chamber 10. The displacement chamber 10 is thereby connected to the pressure medium via a gap 11 in the piston 8 and/or the bore 9. Furthermore, the piston 8 is connected to the displacement chamber 10 via supply 12, which supply 12 comprises a check valve 13 which can be acted on by the bearing pressure medium. In this way, a filling of the displacement chamber 10 is feasible during the closing process of the valve disc 3, as is indicated by an arrow 14. Inversely, an emptying is feasible during the opening process via the gap 11 in accordance with arrow 15.

Consequently, during the closing process the load pressure is stored in the displacement chamber 10 and acts on the valve disc 3 in the closing direction, so that the valve, also in the event of dynamical drop of the load pressure, is held closed. Upon opening, the fluid must be pressed out from the displacement chamber 10 through the gap 11. Consequently, the opening speed, and thus the switch-over time, is determined by the gap dimension.

Consequently, a time-delayed activation of the valve disc 3 upon short fall of a static opening pressure is realized, in order to maintain a closed position of the valve upon a temporal short fall of the opening pressure.

As has been described, and is indicated in the enclosed Figures, the displacement chamber 10 is connected to the pressure medium via a gap 11 for emptying the displacement chamber 10. Said gap 11 is in the form of an annular space between the outer diameter of the piston 8 and the inner diameter of the bore 9. The dimension of the gap 11 I can be adjusted by adjusting the size of the piston 8 and/or the size of the bore 9.

Fluid communication between the displacement chamber 10 and the pressure medium, for emptying the displacement chamber 10, may alternatively be realized by providing a longitudinal recess, notch or groove (not shown) in the outer sidewall of the piston 8, and/or in the inner sidewall of the bore 9. Said communication may also be realized by connecting the displacement chamber 10 to the pressure medium by means of a small hole (not shown) through the end area of housing 1.

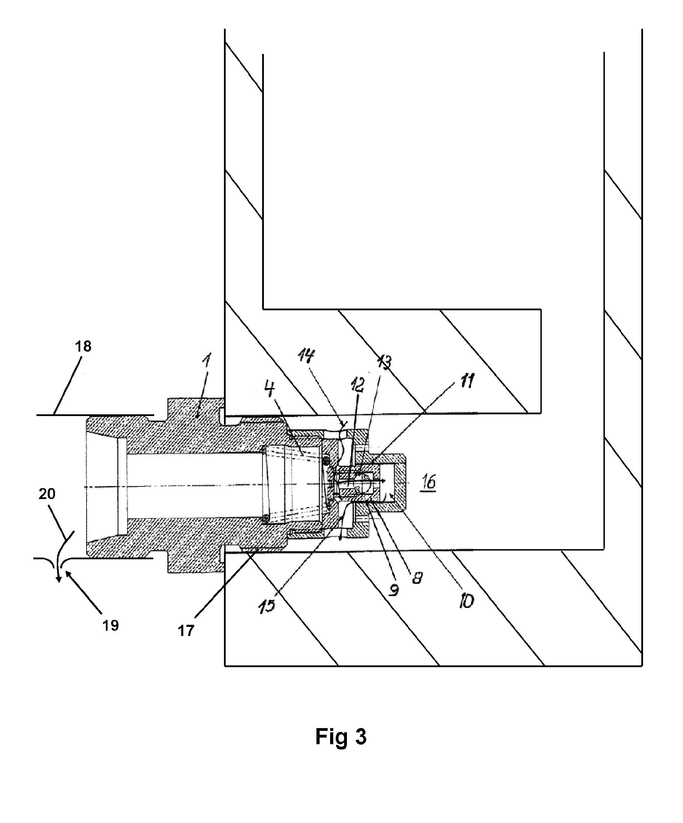

Fig. 3 illustrates the safety valve attached to a hydraulic cylinder with a cylinder space 16. For this reason, the safety valve preferably comprises an external thread 17, as is described in DE 25 00 552 C2 and DE 20 2009 008 659 U.

A load-carrying conduit 18 in the form of a pipe or hose 18 is attached to the other end of the safety valve of Fig. 3, i.e. the end opposed to the one which is screwed into the hydraulic cylinder. A breakage 19 of the load-carrying conduit 18 is schematically shown, and an arrow 20 indicates leaking pressure medium. The safety valve has switched over to the closed position in order to prevent an uncontrolled fall of a load carried by the hydraulic cylinder.

## Claims

1. Safety valve for pipe or hose breakages, for example in the form of an insertion cartridge, for use in hydraulic load-lifting apparatuses such as forklifts, hoists or charging cranes for closing off load-carrying conduits in case of damages, wherein a sealing seat (2) comprises an associated closure element (3), for example in the form of a valve disc (3), for blocking pressure medium supplied via flow passages (6, 7) against a restoring force of a spring (4), **characterised in that** the movable closure element (3) is attached to a cylindrical piston (8), which plunges into a corresponding bore (9) to form a displacement chamber (10) which is connected to the cylinder space (16) via a gap (11) of the piston (8) and/or of the bore (9).

2. The safety valve of claim 1, **characterised in that** the piston (8) comprises a supply (12) for supplying the pressure medium to the displacement chamber (10), which supply (12) is controlled by a check valve (13).

3. The safety valve of claim 1 or 2, **characterised in that** an opening speed and thus a switch-over time of the valve is determinable by means of the gap dimension of the gap (11) to the displacement chamber (10).

4. The safety valve of any one of claims 1 to 3, **characterised in that** the bearing pressure medium via bores (7) in an end element of the housing (1) affects the closure element (3) and encloses the displacement chamber (10) for the piston (8).

5. The safety valve of any one of claims 1 to 4, **characterised in that** the closure element (3) and the piston (8) form an integral unit.

6. The safety valve of any one of claims 1 to 5, **characterised in that** the closure element (3) comprises a cylindrical bore, which upon opening slides over a corresponding piston of the housing (1).
